# EUROPEAN PATENT APPLICATION

(11) **EP 2 355 101 A1**
(43) Date of publication of application: **10.08.2011**
(21) Application number: 11000826.5
(22) Date of filing: 02.02.2011
(51) Int. Cl.: G11B 7/125

(54) **Write power setting method and optical disc device**

(30) Priority: 04.02.2010 KR 20100010307
(71) Applicant: Hitachi-LG Data Storage Korea, Inc., Geumcheon-gu Seoul 153-803 (KR)
(72) Inventor: Park, Yongkyu, Seoul 153-803 (KR)
(74) Representative: Katérle, Axel

(57) **Abstract**

A disc write power setting method and a disc device are provided. The write power setting method comprises reading writing characteristic information from a disc; writing test data for each of n write power values and detecting modulation with respect to the written data; calculating, for each of k power coefficients, a straight line approximating a curve composed of n points which have x coordinates corresponding to differences between a corresponding power coefficient and the write power values used for the test data writing and y coordinates corresponding to the product of modulation for the write power values and a corresponding difference and selecting a straight line having the smallest error with a corresponding curve among k straight lines and the power coefficient corresponding to the straight line; and setting optimum write power based on the selected straight line, the selected power coefficient and the read writing characteristic information.

## Description

### Field

This document relates to a method for reducing write power deviation.

### Related Art

Large-capacity disc media for storing a vast amount of data and high-speed recording devices for recording large-capacity data on media within a short time are commercialized.

An optical disc writing device performs an optimum power control (PCA) operation in a predetermined area of an optical disc, for example, power calibration area (PCA), to detect optimum write power and carries out a requested writing operation with the detected optimum write power to thereby secure writing quality.

However, a servo state applied to test data writing depends on calibration factors such as focusing balance, tracking balance and tilt and a measurement error is generated when the OPC operation is performed, and thus there is a deviation in the optimum write power detected even from the same disc. This optimum write power deviation may decrease writing quality when writing density or writing speed is high.

### SUMMARY

An aspect of this document is to provide a method for reducing OPC deviation and setting optimum write power.

In an aspect, a write power setting method comprises: reading writing characteristic information from a disc; writing test data for each of n write power values and detecting modulation with respect to the written data; calculating, for each of k power coefficients, a straight line approximating a curve composed of n points which have x coordinates corresponding to differences between a corresponding power coefficient and the write power values used for the test data writing and y coordinates corresponding to product of modulation for the write power values and a corresponding difference and selecting a straight line having a smallest error with a corresponding curve among k straight lines and a power coefficient corresponding to the straight line; and setting optimum write power based on the selected straight line, the selected power coefficient and the read writing characteristic information.

In another aspect, an optical disc device comprises an optical pick-up for writing data on a disc or reading data from the disc using a laser beam emitted from a laser diode; an optical driving unit for applying a driving signal for driving the laser diode with desired power to the optical pick-up; a writing/reproducing unit for processing servo signals and recording/reproduced data; and a controller configured to control the optical driving unit and the writing/reproducing unit, wherein the controller is configured to control the optical driving unit and the writing/reproducing unit to read writing characteristic information from the disc, write test data for each of n write power values, detect modulation with respect to the written data, calculate, for each of k power coefficients, a straight line approximating a curve composed of n points which have x coordinates corresponding to differences between a corresponding power coefficient and the write power values used for the test data writing and y coordinates corresponding to product of modulation for the write power values and a corresponding difference, select a straight line having a smallest error with a corresponding curve among k straight lines and a power coefficient corresponding to the straight line, and set optimum write power based on the selected straight line, the selected power coefficient and the read writing characteristic information.

The n write power values applied to the test data writing and modulation detection may be selected in the vicinity of an estimated value for an actual write peak power among the read writing characteristic information.

The k power coefficients may be selected within a power range lower than peak power temporarily calculated from the read writing characteristic information.

The optimum write power may be obtained by multiplying the sum of the value of the point at which the selected straight line meets the x-axis and the selected power coefficient by a scaling factor for obtaining the optimum write power from an actual write peak power in the writing characteristic information.

The straight lines each approximating the corresponding curve may be obtained through a least square method and a straight line having the smallest least square error may be selected.

Accordingly, OPC deviation can be reduced and optimum write power can be set due to less influence of servo state.

### BRIEF DESCRIPTION OF THE DRAWINGS

The implementation of this document will be described in detail with reference to the following drawings in which like numerals refer to like elements.

FIG. 1 illustrates a write power setting method applied to a BD-recordable disc;

FIG. 2 illustrates a method of scanning compensation power coefficients while fitting data according to an embodiment of this document;

FIG. 3 illustrates a method of calculating optimum write power using a scanned compensation power coefficient according to an embodiment of this document;

FIG. 4 illustrates a configuration of an optical disc device to which this document is applied; and

FIG. 5 is a flowchart illustrating a write power setting method according to an embodiment of this document.

### DETAILED DESCRIPTION

Hereinafter, an implementation of this document will be described in detail with reference to the attached drawings.

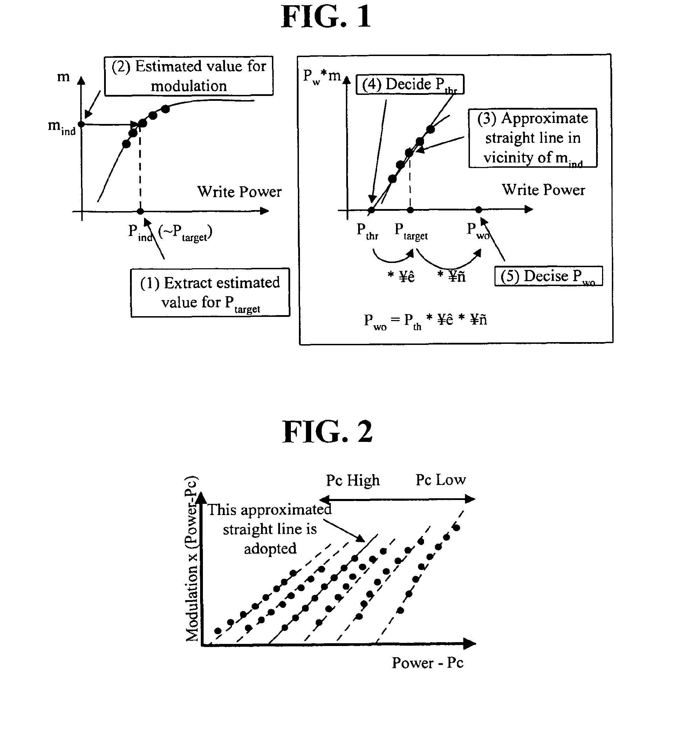

FIG. 1 illustrates a Kappa OPC method applied to a BD-recordable disc. The Kappa OPC method is briefly described.

The left graph in FIG. 1 shows the modulation curve versus write power. The modulation is represented by the ratio of the amplitude I_{8PP} of AC component of an RF signal according to mark 8T and space 8T corresponding to the longest mark and space to the amplitude I_{8H} DC component of the RF signal, m=I_{8PP}/I_{8H}. As shown in FIG. 1, the modulation increases as the write power increases and is saturated when the write power reaches a certain level.

Since the OPC operation is very sensitive to the servo state and disc state, the modulation must be measured in a power range sufficiently lower than the level at which the modulation is saturated. To achieve this, for optimum write peak power P_{WO} to be obtained the actual write peak power Ptarget is defined as P_{target} = P_{WO}/ρ, ρ ≥ 1.15. Here, ρ is a scaling factor for obtaining the optimum write power from the actual write peak power and is provided through disc information.

The modulation curve versus the write power is approximated as m (P_{W}) = mₘₐₓ * (1-Pₜₕᵣ/P_{W}) to reduce the influence of measurement error and noise. Here, mₘₐₓ represents maximum modulation (maximum modulation saturation level) and Pₜₕᵣ denotes threshold power. In this simplified model, a function f (P_{W}) = P_{W} * m(P_{W}) becomes the straight line P_{W} * m (P_{W}) = mₘₐₓ * (P_{W} - Pₜₕᵣ) as the right graph in FIG. 1. The ratio of P_{target} to Pₜₕᵣ is defined as K = P_{target}/Pₜₕᵣ.

To obtain the optimum write peak power Pwo, a laser diode is driven using a plurality of power values P_{W} in the vicinity of P_{ind} included in disc information of a disc on which data will be written, test data is written on the disc, and modulation m(Pw) for each power value P_{W} is obtained. Here, P_{ind}, an estimated value for P_{target}, is included in the disc information and provided by the disc manufacturer. Modulation M_{ind} estimated when test writing is performed with P_{ind} is also included in the disc information and provided.

The values for the function f(P_{W}) = P_{W} * m (P_{W}) are calculated for the multiple write power values P_{W}, points are indicated on plane coordinates having P_{W} as the x-axis and f(P_{W}) as the y-axis, a straight line most approximate to the function f(P_{W}) is obtained according to the least square method, for example, and Pₜₕᵣ corresponding to the point at which the straight line meets the x-axis is obtained.

The actual write peak power P_{target} and optimum write peak power P_{WO} can be obtained according to P_{target} * Pₜₕᵣ and P_{WO} = ρ * K * Pₜₕᵣ by using κ and ρ provided through the disc information.

However, when the modulation is calculated through this method during the OPC operation, the modulation is varied according to focus balance, tilt control value, etc. during measurement, and thus the calculation result has a large deviation.

Accordingly, this document provides a method in which compensation power coefficients Pc are introduced when approximating write power values used for test writing and measured modulation values, a coefficient corresponding to the least square is selected while scanning the compensation power coefficients and optimum power is obtained from the selected coefficient. Here, the compensation power coefficient that has been scanned does not affect OPC result and reduces a modulation measurement error to decrease OPC deviation since the compensation power coefficient is compensated when OPC optimum power is obtained.

FIG. 2 illustrates a method of scanning the compensating power coefficients while fitting data according to an embodiment of this document.

Specifically, test data is written on a disc while a laser diode is driven with multiple power values Pᵢ(i=1, 2, 3,...,n) in the vicinity of P_{ind} included in the disc information of the disc, an RF signal is detected from marks and spaces written according to each power values, and modulation m(Pᵢ) for each write power value Pᵢ is obtained.

In addition, a predetermined number of compensation power coefficients P_{Cj} (j = 1, 2, 3,....k), for example, sixteen compensation power coefficients, may be selected in a power range lower than peak power, for example, in a power range corresponding to 25 to 70% of the peak power.

Subsequently, n*k points are indicated on the xy plane having (Pᵢ-P_{Cj}), which corresponds to the difference between the write power value used for test writing and the compensation power coefficient, as the x-axis and having m (Pᵢ) * (Pᵢ-P_{Cj}), which corresponds to the product of the modulation for write power value obtained through test writing and the difference (Pᵢ-P_{Cj}), as the y-axis on the basis of the modulation m(Pᵢ) for each write power value Pᵢ obtained through the test writing and each P_{Cj}.

For each compensation power coefficient P_{Cj}, a straight line Lⱼ fitting or approximating a curve composed of n power values Pi is obtained using a least square method, for example. Then, a straight line having the smallest least square error among k straight lines obtained for the compensation power coefficients P_{Cj} and the compensation power coefficient corresponding to the straight line are selected.

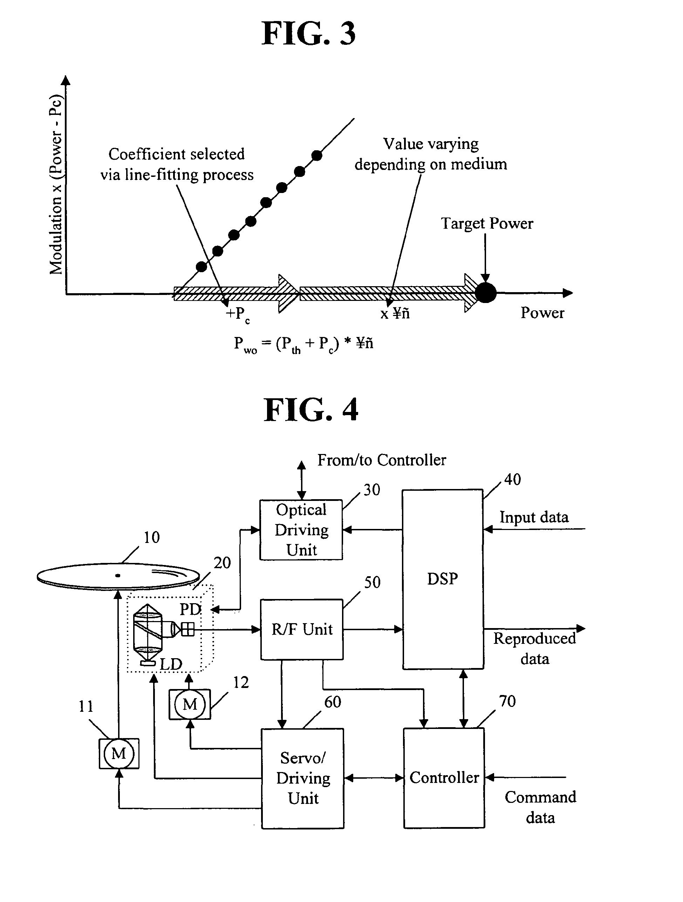

When the selected compensation power coefficient is P_{c} and the point at which the selected straight line meets the x-axis is Pₜₕ, the optimum write peak power Pwo can be calculated according to P_{WO} = (Pₜₕ + P_{c}) * ρ, as shown in FIG. 3. Here, ρ is data included in the disc information and registered in an OPC condition table before OPC is performed.

A write power setting method according to this document can be applied to disc recording devices capable of writing data on optical discs such as CD, DVD, BD, etc. FIG. 4 illustrates a configuration of an optical disc device to which the write power setting method is applied according to this document.

The optical disc device according to this document may include a spindle motor 11, a sled motor 12, an optical pick-up 20 which writes data on an optical disc or reads data from the optical disc using laser beam, a writing/reproducing unit which drives the spindle motor 11, the sled motor 12 and the optical pick-up 20 and processes servo signals and written/reproduced data, and a controller 70 controlling the writing/reproducing unit. The writing/reproducing unit may include an optical driving unit 30, a digital signal processor (DSP) 40, an R/F unit 50 and a servo/driving unit 60. The optical driving unit 30 may be included in the optical pick-up 20.

The DSP 40 adds error correction code (ECC) to input digital data to transform the digital data into a writing format. The optical driving unit 30 outputs a light driving signal depending on a signal inputted thereto and the optical pick-up 20 writes data on an optical disc 10 or reads data from the recording surface of the optical disc 10 according to the light driving signal.

The optical driving unit 30 outputs a write pulse signal for forming each mark to a laser diode included in the optical pick-up 20 when data is written on the optical disc 10 and outputs a level required to read data from the optical disc 10 to the laser diode of the optical pick-up 20 when the data is read from the optical disc 10. The optical driving unit 30 performs power control through an automatic power control (APC) circuit included therein to maintain uniform output power of the laser diode.

The R/F unit 50 filters and shapes the signal detected by the optical pick-up 20 to output the signal as a binary signal and generates a tracking error signal, a focus error signal and an RF signal. The DSP 40 reconstructs the original data from the binary signal with the clock signal thereof, which is phase-locked to the binary signal. The servo/driving unit 60 generates servo signals required for focusing servo, tracking servo, sled servo and spindle servo based on the signal from the R/F unit 50, drives the spindle motor 11 rotating the optical disc 10 and the sled motor 12 moving the optical pick-up 20 to inner and outer circumferential directions and drives current required for focusing servo and tracking servo of an object lens included in the optical pick-up 20.

The controller 70 controls the aforementioned components to write data on the optical disc 10 or read data from the optical disc 10. Specifically, the controller 70 controls the optical driving unit 30 to drive the laser diode in the optical pick-up 20 with reproducing power to read data from the optical disc 10 or to drive the laser diode with writing power to write data on the optical disc 10.

Furthermore, the controller 70 controls the servo/driving unit 60 based on the RF signal and servo signals detected by the optical pick-up 20 and output from the R/F unit 50 to drive the spindle motor 11 to rotate the optical disc 10 at a desired speed and to drive the sled motor 12 to move the optical pick-up 20 to a desired position. In addition, the controller 70 controls the servo/driving unit 60 to apply current to an actuator supporting the object lens in the optical pick-up 20 to perform focusing servo and tracking servo.

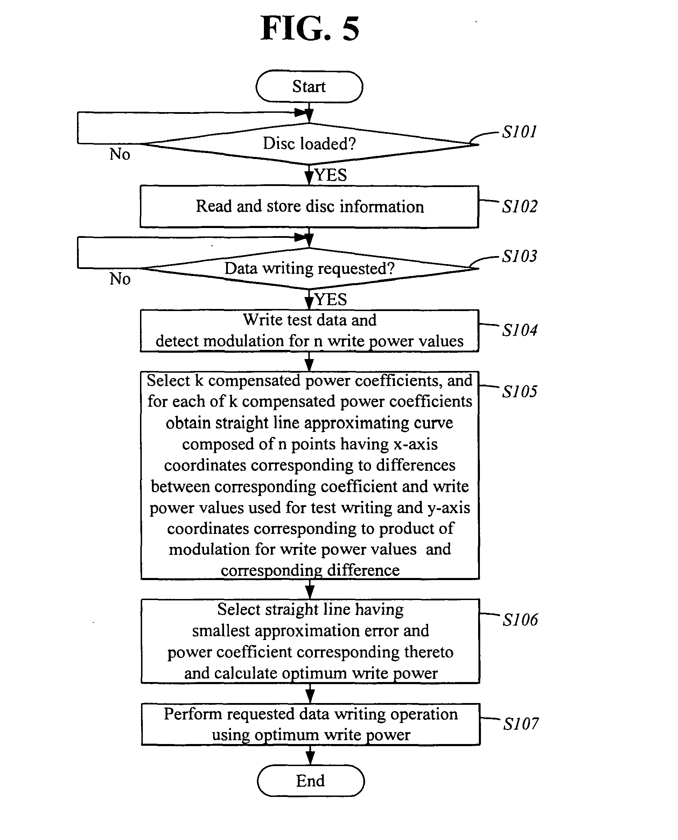

FIG. 5 is a flowchart illustrating a write power setting method according to an embodiment of this document.

Referring to FIGS. 4 and 5, when the optical disc device is turned on or an optical disc is loaded into the optical disc device in step S101, the controller 70 controls the optical driving unit 30, the DSP 40, the R/F unit 50 and the servo/driving unit 60 to read disc information recorded in a lead-in area of the optical disc and store the disc information in a memory (not shown) in the optical disc device in step S102. The disc information includes information representing writing characteristic of the optical disc in association with the OPC operation, for example, P_{ind} that is an estimated value for P_{target}, modulation m_{ind} estimated when test writing is performed with P_{ind}, and κ and ρ used to obtain the actual write peak power and optimum write peak power.

When a data writing request is received from a user in step S103, the controller 70 controls the optical driving unit 30, the DSP 40, the R/F unit 50 and the servo/driving unit 60 to perform OPC in the PCA of the optical disc for multiple write power values in step S104. Specifically, the controller 70 selects multiple power values Pᵢ (i = 1, 2, 3, ..., n) in the vicinity of P_{ind} extracted from the disc information, drives the laser diode using the power values to write test data on the optical disc, detects an RF signal from written marks and spaces and obtains modulation m(Pᵢ) for the write power values Pᵢ.

The controller 70 temporarily calculates peak power from disc writing characteristic data extracted from the disc information and selects a predetermined number of compensation power coefficients P_{Cj} (j = 1, 2, 3, ..., k), for example, sixteen compensation power coefficients, in a power range lower than the temporarily calculated peak power, for example, in a power range corresponding to 25% to 70% of the peak power. This operation can be performed after the step S102 or S104.

For each compensation power coefficient P_{Cj} (j = 1, 2, 3, ..., k), the controller 70 indicates n points on the xy plane having x-axis coordinate values Pᵢ-P_{Cj} and y-axis coordinate values m(Pᵢ)*(Pᵢ-P_{Cj}) using n write power values Pᵢ and modulation m(Pᵢ) obtained through test writing and obtains a straight line Lⱼ approximating a curve composed of the n points according to least square method, for example in step S105.

The controller 70 adopts an approximate straight line having the smallest least square error among k approximate straight lines and the compensation power coefficient P_{c} corresponding thereto, calculates a point Pₜₕ at which the adopted approximate straight line meets the x-axis, and obtains the optimum write peak power, P_{WO} = (Pₜₕ + P_{C}) * ρ, using ρ included in the disc information in step S106.

For reference, a time required to obtain the k approximate straight lines, adopt the approximate straight line having the smallest approximation error and compensation power coefficient corresponding thereto and calculate the optimum write power using the adopted approximate straight line and compensation power coefficient is measured as about 14msec, and thus a delay between when the data writing request is received from the user and when the writing operation is performed is insignificant.

The controller 70 controls the optical driving unit 30 to drive the laser diode with the optimum write peak power and controls the DSP 40, the R/F unit 50 and the servo/driving unit 60 to write the data requested by the user on the optical disc in step S107.

As described above, the compensation power coefficients that have been scanned are compensated with the disc writing characteristic data included in the disc information when OPC optimum write power is calculated, and thus the compensation power coefficients can reduce a modulation measurement error without affecting the OPC result. Accordingly, OPC deviation can be reduced.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A write power setting method, comprising:
reading writing characteristic information from a disc;
writing test data for each of n write power values and detecting modulation with respect to the written data;
calculating, for each of k power coefficients, a straight line approximating a curve composed of n points which have x coordinates corresponding to differences between a corresponding power coefficient and the write power values used for the test data writing and y coordinates corresponding to product of modulation for the write power values and a corresponding difference and selecting a straight line having a smallest error with a corresponding curve among k straight lines and a power coefficient corresponding to the straight line; and
setting optimum write power based on the selected straight line, the selected power coefficient and the read writing characteristic information.

2. The write power setting method of claim 1, wherein the n write power values applied to the test data writing and modulation detection are selected in a vicinity of an estimated value for an actual write peak power among the read writing characteristic information.

3. The write power setting method of claim 1, wherein the k power coefficients are selected within a power range lower than peak power temporarily calculated from the read writing characteristic information.

4. The write power setting method of claim 1, wherein the optimum write power is obtained by multiplying a sum of a value of a point at which the selected straight line meets the x-axis and the selected power coefficient by a scaling factor for obtaining the optimum write power from an actual write peak power in the writing characteristic information.

5. The write power setting method of claim 1, wherein the straight lines each approximating the corresponding curve are obtained through a least square method and a straight line having a smallest least square error is selected.

6. An optical disc device, comprising:
an optical pick-up for writing data on a disc or reading data from the disc using a laser beam emitted from a laser diode;
an optical driving unit for applying a driving signal for driving the laser diode with desired power to the optical pick-up;
a writing/reproducing unit for processing servo signals and recording/reproduced data; and
a controller configured to control the optical driving unit and the writing/reproducing unit,
wherein the controller is configured to control the optical driving unit and the writing/reproducing unit to read writing characteristic information from the disc, write test data for each of n write power values, detect modulation with respect to the written data, calculate, for each of k power coefficients, a straight line approximating a curve composed of n points which have x coordinates corresponding to differences between a corresponding power coefficient and the write power values used for the test data writing and y coordinates corresponding to product of modulation for the write power values and a corresponding difference, select a straight line having a smallest error with a corresponding curve among k straight lines and a power coefficient corresponding to the straight line, and set optimum write power based on the selected straight line, the selected power coefficient and the read writing characteristic information.

7. The optical disc device of claim 6, wherein the controller selects the n write power values applied to the test data writing and modulation detection in a vicinity of an estimated value for an actual write peak power among the read writing characteristic information.

8. The optical disc device of claim 6, wherein the controller selects the k power coefficients within a power range lower than peak power temporarily calculated from the read writing characteristic information.

9. The optical disc device of claim 6, wherein the controller obtains the optimum write power by multiplying a sum of a value of a point at which the selected straight line meets the x-axis and the selected power coefficient by a scaling factor for obtaining the optimum write power from an actual write peak power in the writing characteristic information.

10. The optical disc device of claim 6, wherein the controller obtains straight lines each approximating the corresponding curve through a least square method and selects a straight line having a smallest least square error.
